Europäisches Patentamt

European Patent Office

Office européen des brevets

(19)

(11) EP 0 630 544 B1

(12) **EUROPÄISCHE PATENTSCHRIFT**

(45) Veröffentlichungstag und Bekanntmachung des Hinweises auf die Patenterteilung:
**21.05.1997 Patentblatt 1997/21**

(21) Anmeldenummer: **93903841.0**

(22) Anmeldetag: **02.03.1993**

(51) Int Cl.$^6$: **H04N 1/41**

(86) Internationale Anmeldenummer:
**PCT/DE93/00182**

(87) Internationale Veröffentlichungsnummer:
**WO 93/18611 (16.09.1993 Gazette 1993/22)**

(54) **VERFAHREN ZUR BILDADAPTIVEN REGELUNG DER LÄNGE EINES QUANTISIERUNGSINTERVALLS BEI DER BILDDATENREDUKTION**

IMAGE-ADAPTIVE PROCESS FOR REGULATING THE LENGTH OF A QUANTIFICATION INTERVAL DURING IMAGE DATA REDUCTION

PROCEDE DE REGULATION EN FONCTION DE L'IMAGE DE LA LONGUEUR D'UN INTERVALLE DE QUANTIFICATION LORS DE LA REDUCTION DE DONNEES D'IMAGES

(84) Benannte Vertragsstaaten:
**DE FR GB**

(30) Priorität: **09.03.1992 DE 4207406**

(43) Veröffentlichungstag der Anmeldung:
**28.12.1994 Patentblatt 1994/52**

(73) Patentinhaber: **SIEMENS AKTIENGESELLSCHAFT 80333 München (DE)**

(72) Erfinder: **KUTKA, Robert D-8085 Geltendorf (DE)**

(56) Entgegenhaltungen:
**EP-A- 0 424 060        EP-A- 0 435 163**

**Beschreibung**

Für viele praktische Anwendungen der Bilddatenkompression ist es notwendig, eine vorgegebene Bildqualität der komprimierten Bilddaten bei gleichzeitig maximalem Datenkompressionsfaktor zu erreichen. Die meisten dabei verwendeten Bilddatenkompressionsverfahren lassen sich durch einen Parameter steuern. Bei dem vielfach verwendeten JPEG-Algorithmus ist dies der Q-Faktor. Erhöht man diesen Q-Faktor, nimmt die Bildqualität der rekonstruierten Bilder zu, d. h. weniger Quantisierungsrauschen verbleibt im Bild. Dies geschieht jedoch immer auf Kosten des Kompressionsfaktors, welcher mit steigendem Q-Faktor abnimmt. Der Q-Faktor wirkt dabei dividierend auf die Länge der Quantisierungsintervalle der DCT-Koeffizienten. Eine Erniedrigung des Q-Faktors bedeutet also eine gröbere Unterteilung des Wertebereichs und damit größere Quantisierungsfehler.

Um einen möglichst großen Datenkompressionsfaktor zu erreichen, gilt es also, den Q-Faktor für jedes zu komprimierende Bild so niedrig wie möglich einzustellen, um Daten zu sparen, und gerade so hoch wie nötig, um die erforderliche Bildqualität zu garantieren. Diese Einstellung wird als optimaler Q-Faktor bezeichnet.

Läßt man beispielsweise Bilder von Fingerabdrücken, die jeweils mit verschiedenen Q-Faktoren komprimiert wurden, von verschiedenen Experten beurteilen, zeigt sich, daß die optimalen Q-Faktoren von Bild zu Bild variieren, d. h. verschiedene Fingerabdrücke sind unterschiedlich sensibel gegenüber Datenkompressionsfehlern. Diese Beobachtungen zeigen somit, daß es keinen einheitlichen Q-Faktor für verschiedene Bilddaten gibt, sondern daß vielmehr der optimale Q-Faktor für jedes Bild individuell, d. h. bildadaptiv bestimmt werden muß. Bisher geschieht dies z. B. durch menschliche Experten, welche nach erfolgter Datenkompression mit einem gegebenen Q-Faktor die Bildqualität als zufriedenstellend oder nicht zufriedensstellend beurteilen, und daraufhin gegebenenfalls den Q-Faktor erhöhen. Diese Vorgehensweise erfordert im allgemeinen mehrere Abläufe der Datenkompression eines Bildes mit mehreren Q-Faktoren, bis der optimale Q-Faktor gefunden wurde.

Aus EP-A-0435163 ist bekannt, die Länge des Quantisierungs-intervalls für einen Bildblock abhängig von den Maximal- und Minimalwerten des Bildsignals in diesem Bildblock, oder von dem Absolutwert der Summe der Differenzen der Bildwerte von benachbarten Bildpunkten in diesem Block zu wählen.

Der Erfindung liegt deshalb die Aufgabe zugrunde, ein Verfahren zur automatischen Bestimmung solcher Parameter von Bilddatenkompressionsverfahren anzugeben, mit denen das Ziel der Erreichung einer vorgegebenen Bildqualität bei maximaler Datenkompression erreicht werden kann. Diese Aufgabe wird durch ein Verfahren zur bildadaptiven Regelung der Länge eines Quantisierungsintervalls bei der Bilddatenreduktion mit Merkmalen nach Anspruch 1 gelöst.

Das erfindungsgemäße Verfahren erlaubt es damit, die Bildqualität jedes zu kodierenden Bildes automatisch einzustellen. Dies geschieht dadurch, daß die mittlere Bildintensität aus den Intensitätswerten aller Bildpunkte eines Bildes ermittelt wird, und weiterhin der Bildkontrast aus den Intensitätswerten aller Bildpunkte ermittelt wird, und schließlich die Länge des Quantisierungsintervalls durch einen Faktor dividiert wird, der eine monotone Funktion einer Linearkombination aus mittlerer Bildintensität und dem Bildkontrast ist.

Dieses Verfahren hat den Vorteil, daß zu seiner Anwendung keine vorläufigen Abläufe des Bilddatenreduktionsverfahrens notwendig sind. Das Verfahren kann allein anhand der unkomprimierten Bilder die optimalen Quantisierungsintervalle bzw. optimale Faktoren zur Regelung der Länge dieser Quantisierungsintervalle liefern. Dabei benötigt das vorgeschlagene Verfahren nur etwa eine halbe arithmetische Operation pro Bildpunkt. Dieser Rechenaufwand kann im Vergleich zum eigentlichen Bilddatenreduktionsverfahren vernachlässigt werden.

Für die komprimierte Archivierung von Bilddaten unter Verwendung des erfindungsgemäßen Verfahrens ist damit kein manueller Eingriff durch Experten mehr nötig. Schließlich erreicht man mit Hilfe des erfindungsgemäßen Verfahrens einen höheren Datenkompressionsfaktor als bei der Benutzung konstanter, bildunabhängiger Datenkompressionsparameter.

Das Verfahren eignet sich besonders zur Bestimmung des Q-Faktors in einem JPEG-Datenkompressionsverfahren.

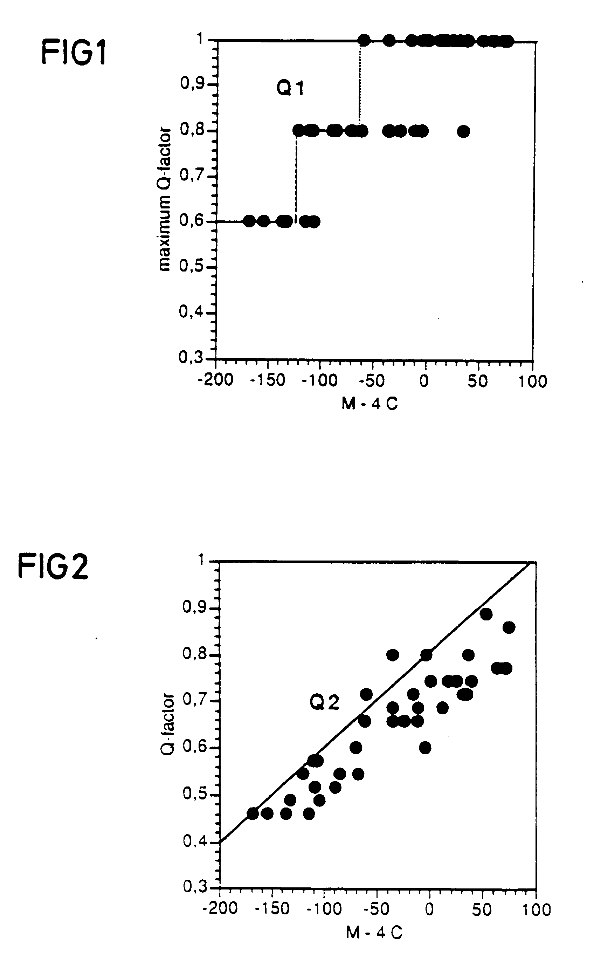

Figur 1 zeigt die stufenförmige Abhängigkeit des berechneten Q-Faktors Q vom Mittelwert M und vom Kontrast C bei einer ersten Ausführungsform der Erfindung.

Figur 2 zeigt die lineare Abhängigkeit des berechneten Q-Faktors Q vom Mittelwert und Kontrast bei einer zweiten Auführungsform der Erfindung.

Figur 3 zeigt die Korrelation zwischen dem durchschnittlichen optimalen Q-Faktor Q und dem Kontrast innerhalb eines Fensters von 64 x 64 Pixeln in der Bildmitte anhand einer Stichprobe von 38 Fingerabdrücken der Größe 512 x 512 Pixel.

Figur 4 zeigt die Korrelation zwischen dem durchschnittlichen optimalen Q-Faktor Q und dem Kontrast innerhalb des segmentierten Fingerabdrucks.

Figur 5 zeigt die Korrelation zwischen dem durchschnittlichen optimalen Q-Faktor Q und dem Kontrast über das ganze Bild.

Figur 6 zeigt die statistische Abhängigkeit des durchschnittlichen optimalen Q-Faktors Q von der mittleren Bildintensitat.

Figur 7 zeigt die statistische Abhängigkeit des durchschnittlichen optimalen Q-Faktors Q vom Anteil niedriger Intensitätswerte im Bild.

Figur 8 zeigt die statistische Abhängigkeit des durchschnittlichen Q-Faktors Q von der Differenz zwischen mittlerer Bildintensität M und dem Kontrast C.

Figur 9 zeigt die statistische Abhängigkeit des durchschnittlichen Q-Faktors Q von der Differenz M - 4·C.

Figur 10 zeigt die statistische Abhängigkeit des durchschnittlichen Q-Faktors Q von der Differenz M - 10·C.

Figur 11 zeigt die statistische Abhängigkeit des maximalen Q-Faktors Q von der Differenz zwischen der mittleren Bildintensitat M mit dem Kontrast C.

Figur 12 zeigt die statistische Abhängigkeit des maximalen Q-Faktors Q von der Differenz M - 4·C.

Figur 13 zeigt die statistische Abhängigkeit des maximalen Q-Faktors Q von der Differenz M - 10·C.

Im folgenden wird die Erfindung anhand eines bevorzugten Ausführungsbeispiels und mit Hilfe der Figuren näher beschrieben.

Die Arbeitsweise des Verfahrens zur bildadaptiven Regelung der Länge eines Quantisierungsintervalls bei der Bilddatenreduktion laßt sich am einfachsten anhand eines Beispiels von 38 Fingerabdruckvorlagen erläutern, die mit einer Auflösung von 500 Punkten pro Zoll (dpi) und einem Format von 512 x 512 Bildpunkten in acht Bit Tiefe digitalisiert wurden. Diese Bilder wurden in fünf Qualitätsstufen mit den Q-Faktoren 0,4 bis 1,2, variiert in Schritten von 0,2, komprimiert und zusammen mit den unkomprimierten digitalen Bildern Experten zur Beurteilung vorgelegt. Die Fachleute verglichen unter Praxisbedingungen am Bildschirm die Originale mit den komprimierten und rekonstruierten Fingerabdrücken und ordneten jedem die noch tolerierbare Qualitätsklasse bzw. den optimalen Q-Faktor zu. Dabei zeigte sich, daß die Zuordnung durch Experten zwischen Q-Faktoren von Q = 0,4 bis 1,0 variierte, woraus folgt, daß verschiedene Abdrücke unterschiedlich fehlersensitiv sind. Die Variation zwischen den einzelnen Experten ist dabei jedoch nicht so hoch. Die relative Abweichung der Expertenurteile vom Mittelwert beträgt im Durchschnitt 0,12, was auf verhältnismäßig zuverlässige Expertenurteile schließen laßt.

Um zu untersuchen, mit welchen bildtypischen Merkmalen die von den Experten ermittelten optimalen Q-Faktoren korrelieren, wurden folgende Merkmale aus den Bildern gewonnen und auf Korrelation mit den optimalen Q-Faktoren überprüft:

Die mittlere Helligkeit $M = \frac{1}{N} \Sigma_{i,k} p_{i,k}$, wobei $p_{i,k}$ die Bildintensität des Pixels mit den Indizes i und k ist und wobei N die Anzahl benutzter Pixel bedeutet,

Die Varianz

$$S = \frac{1}{N} \sqrt{\Sigma_{i,k} (p_{i,k} - M)^2}$$

der Kontrast

$$C = \frac{1}{2N} \Sigma_{i,k} \left( \left| p_{i,k} - p_{i+1,k} \right| + \left| p_{i,k} - p_{i,k+1} \right| \right)$$

sowie der Anteil kleiner Werte der Bildhelligkeit $P = \frac{L}{N}$, wobei L die Anzahl der Luminanzwerte unterhalb 127 bedeutet.

Diese angegebenen Bildmerkmale können vor der Bilddatenreduktion erfaßt werden. Es sind daher keine Testbilddatenreduktionsläufe notwendig, wodurch ein erheblicher Zeitgewinn gegenüber anderen Verfahren erreicht wird.

Die beschriebenen Bildmerkmale wurden jeweils auf drei Arten gemessen, nämlich

- auf dem ganzen Bild (512 x 512 Bildpunkte),
- innerhalb eines kleinen zentralen Fensters (64 x 64 Bildpukte),
- und innerhalb der extrahierten Fingerabdrucksflache.

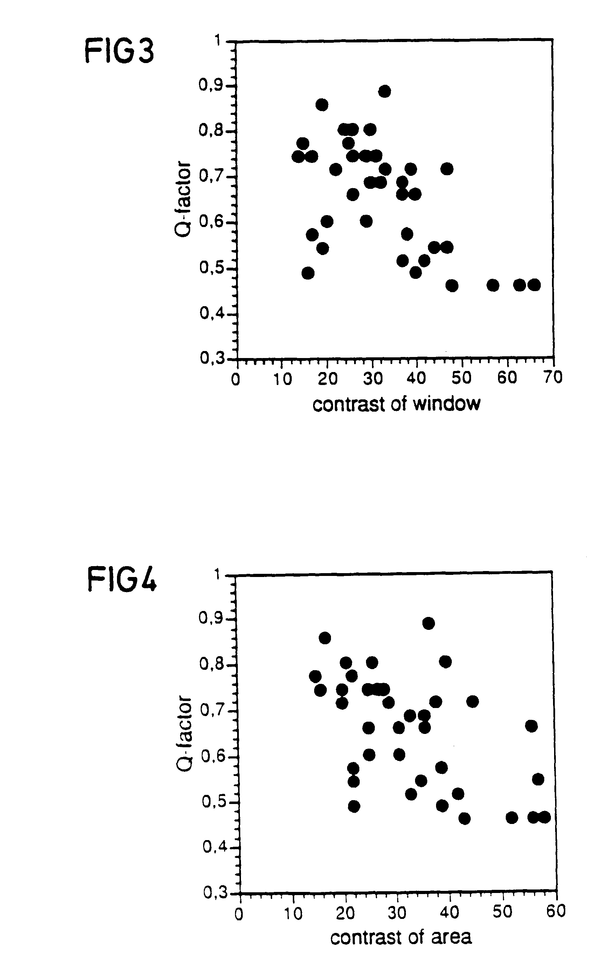

Figur 3 zeigt die Korrelation zwischen dem optimalen Q-Faktor Q und dem Kontrast innerhalb eines Fensters von 64 x 64 Pixeln in der Bildmitte anhand einer Stichprobe von 38 Fingerabdrücken der Größe 512 x 512 Pixel.

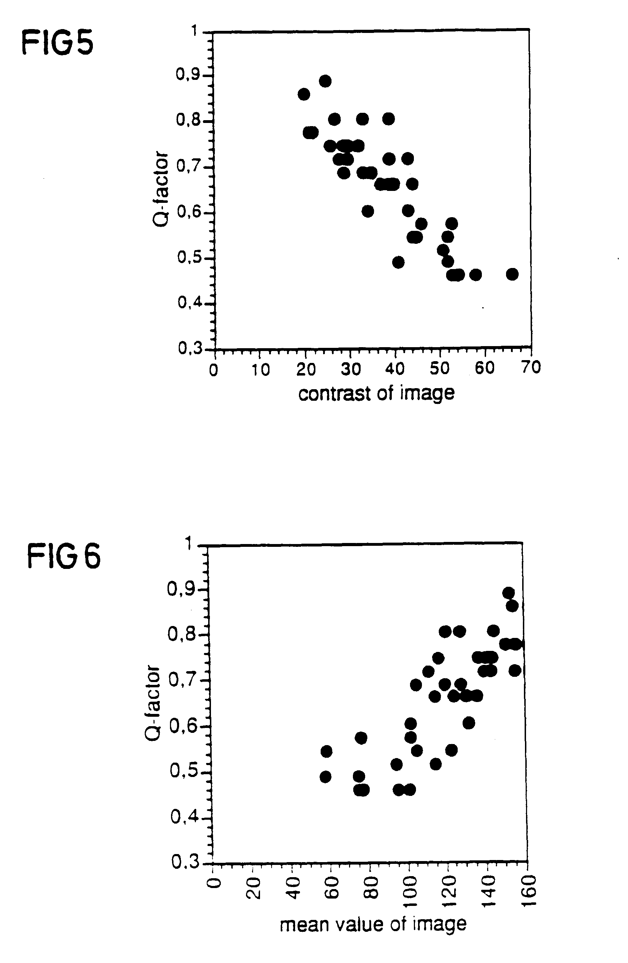

Figur 4 zeigt diese Korrelation innerhalb des segmentierten Fingerabdrucks und Figur 5 zeigt diese Korrelation zwischen dem optimalen Q-Faktor Q und dem Kontrast über das ganze Bild. Durch Betrachtung dieser drei Figuren ist ersichtlich, daß der optimale Q-Faktor am deutlichsten mit dem über das gesamte Bild ermittelten Kontrast korreliert.

Eine weitere Analyse zeigt, daß der Mittelwert M, der Kontrast C und der Anteil niedriger Werte P, jeweils gemessen über die gesamte Bildfläche, eine deutlich geringere Streuung aufweisen als andere Merkmale. Dies bedeutet, daß der optimale Q-Faktor bereits grob aus diesen Merkmalen bestimmen läßt. Ein Blick auf die Figuren 6, 7 und 8 zeigt dabei, daß der Mittelwert M und der Anteil niedriger Werte P recht gut monoton voneinander abhängen. Das bedeutet z. B., daß der Mittelwert M verwendet werden kann, um die Größe P vorherzusagen. Folglich sind nicht beide Größen notwendig, um einen optimalen Q-Faktor automatisch zu ermitteln, sondern eines dieser Merkmale kann bei der Ermittlung eines optimalen Q-Faktors weggelassen werden. Der Kontrast C und der Mittelwert M korrelieren jedoch nicht miteinander, so daß man vermuten kann, daß eine Kombination beider Größen zu einer genaueren Vorhersage des optimalen Q-Faktors führt. Ein Blick auf die Figuren zeigt, daß der Q-Faktor fallend vom Kontrast und steigend vom Mittelwert abhängt. Dies legt den Ansatz

$$Q = f(M - a \cdot C)$$

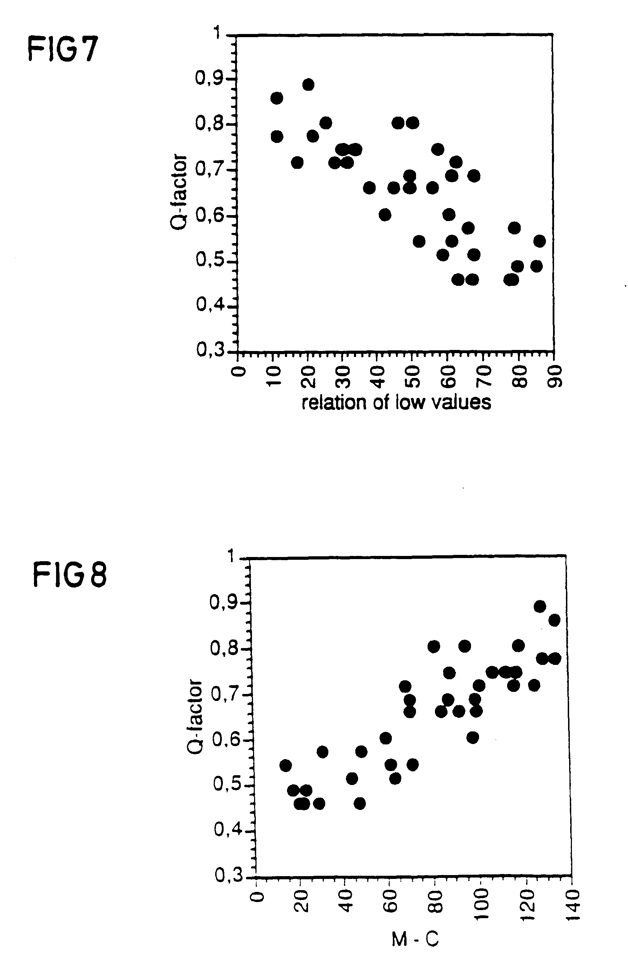

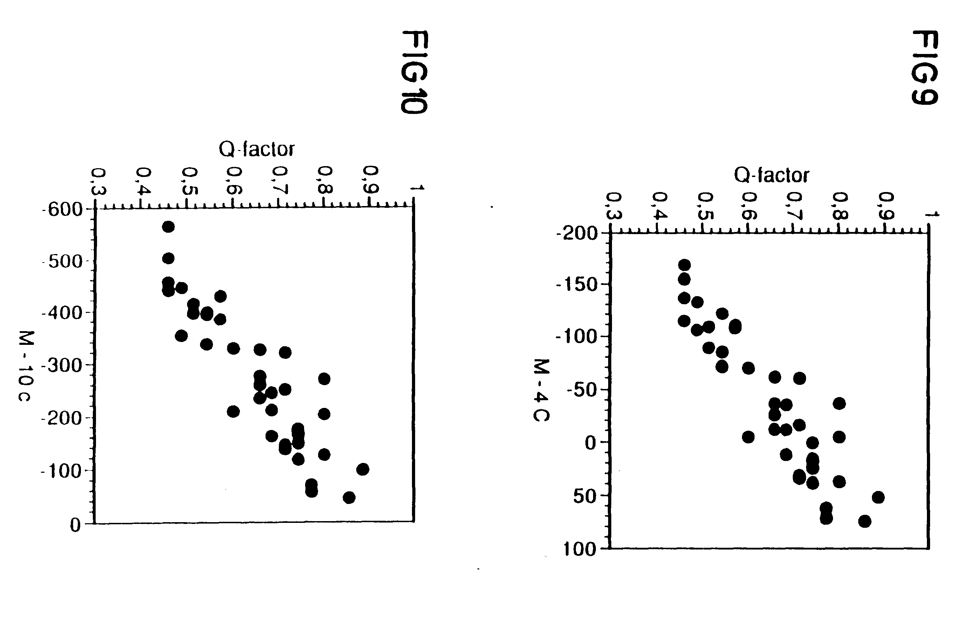

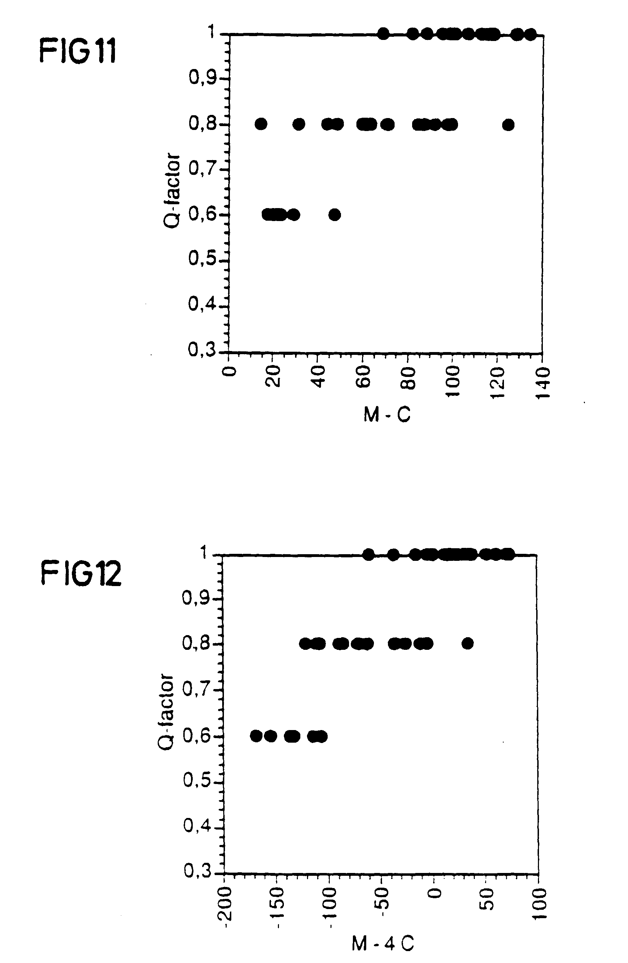

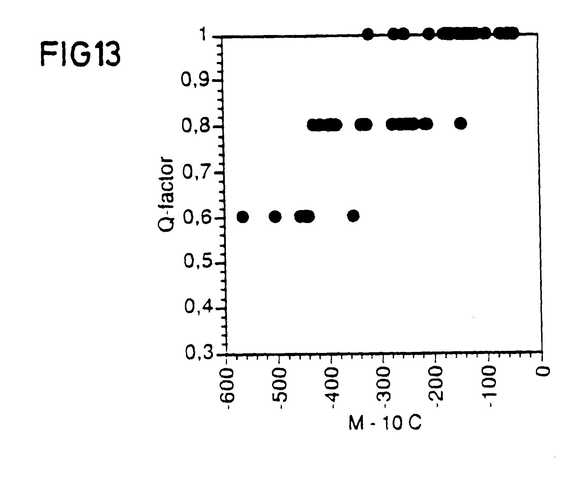

für die Abhängigkeit des optimalen Q-Faktors vom Mittelwert M und dem Kontrast C nahe, wobei a eine geeignet zu wählende Konstante und f eine monoton steigende Funktion sei. Durch weitere Messungen mit den Fingerabdruckbildern wurde ermittelt, daß ein Wert von $a \simeq 4$ zufriedenstellende Resultate liefert, indem die Q-Werte für diesen Wert von a die kleinste Streuung aufweisen. Dies zeigt ein Blick auf die Figuren 8 bis 13. In diesen Figuren ist die Abhängigkeit des Q-Faktors von verschiedenen Linearkombinationen des Mittelwerts M und und des Kontrasts C dargestellt. Die Figuren 8, 9 und 10 zeigen jeweils die Abhängigkeit des durchschnittlichen Q-Faktors von den jeweiligen Linearkombinationen, wogegen die Figuren 11, 12 und 13 die Abhängigkeit des maximalen Q-Faktors von diesen Linearkombinationen der Größen M und C zeigen.

Die Auswertung der oben eingeführten Funktion f verlangt eine Addition pro Bildpunkt für den Mittelwert M und zwei Subtraktionen, zwei Absolutbeträge und zwei Additionen für den Kontrast C. Die Berechnung der Funktion selbst kann vernachlässigt werden, da dies nur einmal pro Bild notwendig ist. Für die Berechnung der obigen Funktion sind demnach sieben arithmetische Operationen pro Pixel notwendig. Um diesen Rechenaufwand weiter reduzieren zu können, kann man zur Ermittlung dieser Merkmale Bilder verwenden, die in jeder Richtung um einen Faktor 4 unterabgetastet sind, wodurch die Ergebnisse nicht beeinflußt werden. Als Ergebnis sind nur noch 7/16 arithmetische Operationen pro Bildpunkt erforderlich, also etwa ein halbe Operation pro Bildpunkt.

Aus diesen Untersuchungsergebnissen kann man nun folgende Funktionen f zur Ermittlung eines optimalen Q-Faktors aus den Größen M und C ableiten:

Legt man die maximalen Q-Faktoren der Abbildungen 11, 12 und 13 zugrunde, so kommt man zu einer stufenweisen Abhängigkeit des optimalen Q-Faktors von der Linearkombination $x = M - 4 \cdot C$, die in unserem Fall z. B. durch den Ausdruck

$$Q1(x) := \begin{cases} 0.6 & \text{falls} \quad x <= -121 \\ 0.8 & \text{falls} \quad -121 < x <= -61 \\ 1 & \text{falls} \quad x > -61 \end{cases}$$

Legt man hingegen die durchschnittlichen Q-Faktoren zugrunde, so kommt man zu einem linearen Verlauf der Funktion f der in unserem Beispiel durch die Gerade

$$Q2(x) := 0{,}8 + 0{,}002\,x$$

wiedergegeben werden kann. Anstelle einer stetigen Funktion für Q2 kann auch eine Treppenfunktion benutzt werden, z. B. eine Treppenfunktion mit Stufenhöhe von 0,2, was der den Experten vorgelegten Skala entspricht.

Die Funktion Q2 führt in jedem Fall zu einer höheren Datenkompression als die Funktion Q1, da Q1 stets größer ist als Q2, was bedeutet, daß die Qantisierungsintervalle nach Division durch Q1, die jetzt kleiner sind als die Quantisierungsintervalle nach einer Division durch Q2.

Bei Verwendung eines JPEG-Datenkompressionsverfahrens zur Kompression der 38 Fingerabdruckbilder stellt sich nun folgender Vergleich der erfindungsgemäßen Verfahrensvarianten mit der Kompression nach Bestimmung eines optimalen Q-Faktors durch den Experten einerseits bzw. nach Kompression mit Hilfe eines konstanten Q-Faktors von 1,0 andererseits dar:

a) Bei visueller Bestimmung eines optimalen Q-Faktors durch Fingerabdruckexperten konnte ein mittlerer Kompressionsfaktor, d. h. ein Verhältnis der Ausgangsdaten zu den komprimierten Daten von 10,85 erreicht werden.

b) Unter Verwendung der Funktion Q1 konnte unter sonst gleichen Bedingungen ein mittlerer Datenkompressionsfaktor von 10,43 erreicht werden.

c) Bei automatischer Ermittlung des mittleren Q-Faktors nach der Funktion Q2 wurde ein mittlerer Kompressionsfaktor von 11,13 erreicht.

d) Verzichtet man dagegen auf eine Klassifikation der Bilddaten und verwendet statt dessen den höchsten visuell bestimmten Q-Faktor von 1,0, so erhält man einen mittleren Kompressionsfaktor von 9,67.

Hieraus ist ersichtlich, daß das Verfahren auf der Grundlage des Q-Faktors Q1 einen um 8% höheren, das Verfahren auf der Grundlage des Q-Faktors Q2 einen um 16% höheren Datenkompressionsfaktor als das Verfahren ohne Klassifikation erreicht. Was die Bildqualität anbelangt, stellte sich heraus, daß bei Verwendung des Q-Faktors Q1 die Bildqualität in jedem Falle besser oder gleich der vom menschlichen Experten geforderten Bildqualität ist. Verwendet man hingegen den Q-Faktor Q2, können im Einzelfall auch niedrigere Bildqualitäten als gefordert auftreten. Diese Abweichungen sind jedoch im allgemeinene gering, so daß es schließlich dem Benutzer selbst überlassen bleibt, sich für die eine oder andere Verfahrensvariante je nach seinen speziellen Qualitätsanforderungen zu entscheiden.

Das hier beschriebene Verfahren ist das erste Verfahren, mit dem eine automatische Einhaltung der Bildqualität bei der Bilddatenreduktion bei gleichzeitiger Erzielung einer maximalen Datenkompression möglich ist. Es ist dabei ein besonderer Virteil des erfindungsgemäßen Verfahrens, daß keine Testläufe eines Datenreduktionsverfahrens erforderlich sind, um die nötigen Eingangsparameter des Verfahrens zu ermitteln. Der Rechenbedarf für das Auffinden der optimalen Parameter des Bilddatenreduktionsverfahrens ist nur etwa eine halbe arithmetische Operation pro Bildpunkt und kann daher im Vergleich zum eigentlichen Bilddatenreduktionsverfahren vernachlässigt werden.

Das hier beschriebene Verfahren zur bildadaptiven Regelung der Lange eines Quantisierungsintervalls bei der Bilddatenreduktion laßt sich nicht nur im Zusammenhang mit einem JPEG-Bilddatenreduktionsverfahren, sondern mit verschiedenen Bilddatenreduktionsverfahren verwenden, bei denen die Ermittlung eines Parameters zur Steuerung eines Quantisierungsintervalls erforderlich ist. Im wesentlichen sind dies Verfahren zur Bilddatenreduktion auf der Grundlage der diskreten Cosinustransformation mit anschließender Quantisierung der Transformationskoeffizierten. Grundsätzlich ist das Verfahren jedoch bei allen Methoden zur Bilddatenreduktion verwendbar, bei denen die Länge eines Quantisierungsintervalls in bildadaptiver Weise geregelt werden kann.

**Patentansprüche**

1.  Verfahren zur bildadaptiven Regelung der Länge eines Quantisierungsintervalls bei der Bilddatenreduktion eines Bildes mit folgenden Schritten:

    a) die mittlere Bildintensitat

    $$M = \frac{1}{N} \Sigma_{i,k} \, p_{i,k}$$

    wird aus den nicht quantisierten Intensitätswerten $p_{i,k}$ aller Bildpunkte $1 <= i <= I$, $1 <= k <= K$ des Bildes ermittelt, wobei $N = I \cdot K$ die Gesamtzahl der Bildpunkte ist;

    b) der Bildkontrast

    $$C = \frac{1}{2N} \Sigma_{i,k} \left( \left| p_{i,k} - p_{i+1,k} \right| + \left| p_{i,k} - p_{i,k+1} \right| \right)$$

    wird ermittelt, wobei $1 <= i <= I-1$ und $1 <= k <= K-1$;

    c) Die Länge $\Delta$ des Quantisierungsintervalls wird durch einen Faktor Q dividiert, der eine monotone Funktion f der Größe $M - a \cdot C$ ist, d. h.

    $$Q = f (M - a \cdot C)$$

    wobei a eine Konstante mit $1 <\simeq a <\simeq 10$ ist.

**2.** Verfahren nach Anspruch 1, bei dem a ≃ 4 ist.

**3.** Verfahren nach einem der vorhergehenden Ansprüche, bei dem f eine stückweise konstante Stufenfunktion ist.

**4.** Verfahren nach Anspruch 3 mit

$$f(x) = \begin{cases} 0.6 & \text{falls} \quad x <= -121 \\ 0.8 & \text{falls} \quad -121 < x <= -61 \\ 1.0 & \text{falls} \quad x > -61 \end{cases}$$

**5.** Verfahren nach einem der Ansprüche 1 oder 2, bei dem f eine lineare Funktion

$$f(x) = b + c \cdot x$$

ist.

**6.** Verfahren nach Anspruch 5 mit $b \simeq 0{,}8$ und $c \simeq 0{,}002$.

**7.** Verwendung eines Verfahrens nach einem der vorhergehenden Ansprüche zur Bestimmung des Q-Faktors in einem JPEG-Datenkompressionsverfahren.

**8.** Verwendung eines Verfahrens nach einem der vorhergehenden Ansprüche zur datenkomprimierten Archivierung von Fingerabdrücken.

**9.** Verwendung eines Verfahrens nach einem der vorhergehenden Ansprüche zur Bestimmung des Q-Faktors in einem JPEG-Datenkompressionsverfahrens zur komprimierten Archivierung von Fingerabdrücken.

**Claims**

**1.** Process for the image-adaptive regulation of the length of a quantisation interval in image data reduction of an image, comprising the following steps:

a) the mean image intensity

$$M = \frac{1}{N} \Sigma_{i,k} \, p_{i,k}$$

is determined from the non-quantised intensity values $p_{i,k}$ of all image dots $1 \le i \le I$, $1 \le k \le K$ of the image, where $N = I \cdot K$ is the total number of image dots;
b) the image contrast

$$C = \frac{1}{2N} \Sigma_{i,k} \, (|p_{i,k} - p_{i+1,k}| + |p_{i,k} - p_{i,k+1}|)$$

is determined, where $1 \le i \le I-1$ and $1 \le k \le K-1$;
c) the length $\Delta$ of the quantisation interval is divided by a factor Q, which is a monotonic function f of the variable $M - a \cdot C$, i.e.

$$Q = f(M - a \cdot C)$$

where a is a constant and $1 \simeq a \simeq 10$.

2. Process according to Claim 1, wherein a ≃ 4.

3. Process according to one of the preceding claims, wherein f is a step by step constant step function.

4. Process according to Claim 3, wherein

$$f(x) = \begin{array}{ll} 0.6 & \text{if} \quad x \leq -121 \\ 0.8 & \text{if} \quad -121 < x \leq -61 \\ 1.0 & \text{if} \quad x > -61 \end{array}$$

5. Process according to one of Claims 1 or 2, wherein f is a linear function

$$f(x) = b + c \cdot x$$

6. Process according to Claim 5, wherein b = 0.8 and c = 0.002.

7. Use of a process according to one of the preceding claims for the determination of the Q-factor in a JPEG data compression process.

8. Use of a process according to one of the preceding claims for the data-compressed archiving of fingerprints.

9. Use of a process according to one of the preceding claims for the determination of the Q-factor in a JPEG data compression process for the compressed archiving of fingerprints.

**Revendications**

1. Procédé de régulation en fonction de l'image de la longueur d'un intervalle de quantification lors de la réduction de données d'images d'une image, avec les étapes suivantes :

   a) on calcule l'intensité d'image moyenne

$$M = \frac{1}{N} \Sigma_{i,k} p_{i,k}$$

   à partir des valeurs d'intensité non quantifiées $p_{i,k}$ de tous les pixels $1 \leq i \leq I$, $1 \leq k \leq K$ de l'image, $N = I \cdot K$ étant le nombre total des pixels ;
   b) on calcule le contraste d'image

$$C = \frac{1}{2N} \Sigma_{i,k} (|p_{i,k} - p_{i+1,k}| + |p_{i,k} - p_{i,k+1}|)$$

   où $1 \leq i \leq I-1$ et $1 \leq k \leq K-1$;
   c) on divise la longueur $\Delta$ de l'intervalle de quantification par un facteur Q qui est une fonction monotone f de la valeur M - a · C, donc

$$Q = f (M - a \cdot C)$$

   a étant une constante avec $1 \lesssim a \lesssim 10$.

2. Procédé selon la revendication 1, dans lequel a ≈ 4.

3. Procédé selon l'une des revendications précédentes, dans lequel f est une fonction échelonnée continue par morceaux.

4. Procédé selon la revendication 3, avec

$$f(x) \quad = \quad \begin{cases} 0.6 & \text{si} & x <= \quad -121 \\ 0.8 & \text{si} & -121 < x <= -61 \\ 1.0 & \text{si} & x > -61 \end{cases}$$

5. Procédé selon l'une des revendications 1 ou 2, dans lequel f est une fonction linéaire

$$f(x) = b + c \, . \, x$$

6. Procédé selon la revendication 5, avec $b \approx 0,8$ et $c \approx 0,002$.

7. Utilisation d'un procédé selon l'une des revendications précédentes pour déterminer le facteur Q dans un procédé de compression de données J.P.E.G.

8. Utilisation d'un procédé selon l'une des revendications précédentes pour archiver des données comprimées d'empreintes digitales.

9. Utilisation d'un procédé selon l'une des revendications précédentes pour déterminer le facteur Q dans un procédé de compression de données J.P.E.G. pour archiver des données comprimées d'empreintes digitales.

FIG1

FIG2

FIG3

contrast of window

FIG4

contrast of area

10

FIG 5

FIG 6

FIG 7

FIG 8

FIG 9

FIG 10

FIG 11

FIG 12

14

FIG13